# EUROPÄISCHE PATENTANMELDUNG

(11) **EP 4 570 402 A1**
(43) Veröffentlichungstag der Anmeldung: **18.06.2025**
(21) Anmeldenummer: 23215434.4
(22) Anmeldetag: 11.12.2023
(51) Int. Cl.: B23B 27/04

(54) **ABSTECHWERKZEUG**

(71) Anmelder: CERATIZIT Austria Gesellschaft m.b.H., 6600 Reutte (AT)
(72) Erfinder: GOEBERL, Christian, 6600 Reutte (AT)
(74) Vertreter: Ciesla, Dirk

(57) **Zusammenfassung**

Stechplatte (1) mit einem von einem Schaft (2) abstehenden Schneidkantenabschnitt (3), der eine Stirnschneidkante (4), zwei seitliche Seitenschneidkanten (5) aufweist, wobei die Stirnschneidkante (4) und die beiden Seitenschneidkanten (5) jeweils gerade ausgeformt sind, wobei die Spanfläche (4) einen mit der Stirnschneidkante (4) verbundenen Stirnrandbereich (11) aufweist, wobei der Stirnrandbereich (11) mindestens ein Spanformelement (23) zur rillenartigen Spanformung eines über die Stirnschneidkante (4) außermittig ablaufenden Spans aufweist und beidseits des Spanformelements (23) auf einen Tiefpunkt (41) unterhalb von der Stirnschneidkante (4) vertieft ist. Mit der Stechplatte kann eine bereits erzeugte Nut durch einen lateralen Versatz der Stechplatte verbreitet werden, indem die Stechplatte aus der Nut herausbewegt und um weniger als die durch den Schneidkantenabschnitt definierte Einstechbreite lateral versetzt und sodann erneut radial von außen nach innen in das Werkstück einsticht; bezüglich der Stirnschneidkante wird dabei also nur mit einem Teilabschnitt im Bereich des Stirnrandbereichs eingestochen.

## Beschreibung

Die vorliegende Erfindung betrifft eine Stechplatte und liegt im technischen Gebiet des Einstechdrehens.

Einstechdrehen ist ein Zerspanungsverfahren. Dabei wird ein Werkzeug, oft in Form einer Schneidplatte, üblicherweise radial in ein relativ zum Werkzeug drehendes Werkstück von außen nach innen eingeführt, um Material abzutragen und so eine Nut mit definierter Breite und Tiefe zu erzeugen.

Beim Einstechdrehen spielt die Spanabfuhr eine wichtige Rolle. Wenn die Späne nicht hinreichend kurz gebrochen werden, kommt es in der Nut zu einem Spanstau. Die Folge sind eine schlechte Oberflächenqualität und ein Verklemmen der Späne. Letzteres kann sogar zum Werkzeugbruch führen.

Die WO 2021/023835 A1 zeigt eine Schneidplatte, die zum Einstechdrehen verwendet werden kann. Die in der WO 2021/023835 A1 gezeigte Schneidplatte hat ein Problem beim sogenannten Versatzstechen, also bei einem Einstechdrehen, bei welchem eine Nut dadurch verbreitet wird, dass die Schneidplatte bezüglich ihrer Einstichbreite nur teilweise in das Werkstück einsticht. Denn dann besteht die Gefahr, dass sich der Span helixartig aufrollt, wodurch ein spanbrechender Kontakt mit dem Werkstück oder Schneidplatte nicht mehr wie gewünscht stattfinden kann, dies umso mehr, wenn das Werkstück und damit der Span aus einem duktilen Metall, also mit einer technischen Bruchdehnung von üblicherweise mehr als 20 %, bestehen.

Die Aufgabe der vorliegenden Erfindung besteht darin, eine Stechplatte mit einer zum Versatzstechen besseren Eignung bereitzustellen.

Die Stechplatte weist einen Schaft und zumindest einen von dem Schaft abstehenden Schneidkantenabschnitt auf, durch den eine Spanfläche berandet ist und der eine Stirnschneidkante, zwei seitliche Seitenschneidkanten und zwei Schneidecken, die durch die Stirnschneidkante miteinander verbunden sind, aufweist, wobei die Stirnschneidkante und die beiden Seitenschneidkanten jeweils in Aufsicht gerade ausgeformt sind, wobei die Spanfläche einen mit der Stirnschneidkante verbundenen Stirnrandbereich und einen mit dem Stirnrandbereich verbundenen sowie oberhalb der Stirnschneidkante gelegenen Innenbereich aufweist, wobei der Stirnrandbereich mindestens ein Spanformelement zur rillenartigen Spanformung eines über die Stirnschneidkante außermittig ablaufenden Spans aufweist und beidseits des Spanformelements auf einen Tiefpunkt unterhalb von der Stirnschneidkante vertieft ist, wobei der Innenbereich mindestens ein Spanleitelement zur Spanleitung des durch das Spanformelement verformten Spans aufweist.

Die Stechplatte ist zum Einstechdrehen geeignet. Mit der Stechplatte kann daher eine bereits erzeugte Nut durch einen lateralen Versatz der Stechplatte verbreitet werden, indem die Stechplatte aus der Nut herausbewegt und um weniger als die durch den Schneidkantenabschnitt definierte Einstechbreite lateral versetzt und sodann erneut radial von außen nach innen in das Werkstück einsticht; bezüglich der Stirnschneidkante wird dabei also nur mit einem Teilabschnitt im Bereich des Stirnrandbereichs eingestochen. Durch die Seitenschneidkanten kann die Stechplatte quer zur Nut in das Werkstück schneidend hineinbewegt werden, und so, in alternativerweise, nämlich durch sogenanntes Längsdrehen, die Nut verbreitern, dabei schneidet also eine der Seitenschneidkanten hauptsächlich.

Das Spanformelement ist zur rillenartigen Spanformung des über die Stirnschneidkante außermittig ablaufenden Spans ausgebildet und damit also außerhalb eines Mittelpunkts der Stirnschneidkante angeordnet. Wenn der Span außermittig über die Stirnschneidkante im Bereich des Spanformelements abläuft, presst sich das Spanformelement in den Span hinein, so dass eine längsförmige Rille in dem Span durch plastische Deformation gebildet wird. Dies reduziert die Bruchdehnung des Spans und versteift diesen, so dass dieser leichter brechen kann.

Das Spanleitelement, welches dem Spanformelement analog ausgebildet sein kann, wirkt mit diesem zusammen, in dem der durch das Spanformelement verformte Span an dem Innenbereich aufsteigt, üblicherweise indem der Span sich dabei spiralförmige aufrollt, und durch das Spanleitelement geführt wird. Der Span kann sich also spiralartig besser aufrollen.

Indem die Stirnrandbereich und damit die Spanfläche beidseits des Spanformelements auf einen Tiefpunkt unterhalb der Stirnschneidkante abfällt, ist der Stirnrandbereich und damit die Spanfläche bereichsweise vertieft. Der Tiefpunkt kann auf der einen Seite des Spanformelements von dem auf der anderen Seite verschieden sein.

Der Stirnrandbereich wird von der Stirnschneidkante berandet. Die Spanfläche kann aufseiten des Stirnrandbereichs eine Fase aufweisen. Die Spanfläche hat üblicherweise bereichsweise einen positiven Spanwinkel und kann direkt an die Stirnschneidkante anschließend die Fase aufweisen.

Mit oberhalb und unterhalb der Stirnschneidkante ist ein Höhenniveauunterschied zur Stirnschneidkante gemeint.

Durch den Schneidkantenbereich wird üblicherweise eine Schneidkantenebene definiert, in welcher zumindest eine gerader Abschnitt der Stirnschneidkante und ein gerader Abschnitt einer der Seitenschneidkanten sich erstreckend sind, so dass oberhalb und unterhalb der Stirnschneidkante üblicherweise oberhalb beziehungsweise unterhalb bezüglich der Schneidkantenebene meint.

Mit dem Spanformelement und dem Spanleitelement ist jeweils eine lokale Spanflächenerhebung gemeint.

Vorzugsweise sind zumindest zwei der Spanformelemente zur dann doppelrillenartigen Spanformung des über die Stirnschneidkante außermittig ablaufenden Spans vorgesehen; das zweite Spanformelement kann dem ersten vorzugsweise analog ausgeformt sein. Zwischen den zwei Spanformelementen wird dann eine Spanformkammer gebildet, welche für eine Querstauchung des Spans sorgt.

Die Stirnschneidkante kann vollständig gerade ausgebildet sein, also nicht nur in Aufsicht gerade erscheinen. Die beiden Seitenschneidkanten können vollständig gerade ausgebildet sein, also nicht nur in Aufsicht gerade erscheinen.

Vorzugsweise sind die beiden Seitenschneidkanten in Aufsicht zueinander gleich lang und maximal 20 % länger oder kürzer als die Stirnschneidkante.

Die Schneidecken sind vorzugsweise jeweils verrundet, vorzugsweise unter einem Eckenradius der 10 % mehr oder weniger von der quer zur Stirnschneidkante bemessenen Breite des Stirnrandbereichs entspricht.

Der Innenbereich ist oberhalb der Stirnschneidkante und damit oberhalb der üblicherweise vorhandenen Schneidkantenebene gelegen, so dass damit auch das Spanleitelement oberhalb der Stirnschneidkante und der üblicherweise vorhandenen Schneidkantenebene gelegen ist.

Die Stechplatte besteht üblicherweise aus einem Hartmetall (Englisch *cemented carbide*)*,* dessen Hartstoffpartikel, üblicherweise im Wesentlichen Wolframkarbid-Partikel, eine Skelettstruktur bilden, wobei die Zwischenräumen in der Skelettstruktur mit einer Metalllegierung befüllt sind.

Gemäß einer Weiterbildung erstreckt sich das Spanformelement oberhalb und unterhalb der Stirnschneidkante. Das Spanformelement ragt also abschnittsweise über die Stirnschneidkante und damit die üblicherweise vorhandene Schneidkantenebene hinaus, wodurch das Spanformelement den außermittig über die Stirnschneidkante ablaufenden Span mit einer Rille versehen kann, deren Tiefe mindestens betragsmäßig dem entsprecht, um das das Spanformelement die Stirnschneidkante und damit die üblicherweise vorhandene Schneidkantenebene überragt.

Gemäß einer Weiterbildung ist das Spanformelement rippenartig oder kuppelartig ausgeformt. Wenn das Spanformelement rippenartig ausgeformt ist, hat es einen Rippengrat, der üblicherweise quer zur Stirnschneidkante erstreckend ist. Wenn das Spanformelement kuppelartig ausgebildet ist, ist das Spanformelement als allseits gewölbte Erhebung ausgebildet, ohne eine bestimmte Haupterstreckungsrichtung in Aufsicht aufzuweisen.

Gemäß einer Weiterbildung ist das Spanleitelement rippenartig oder kuppelartig ausgeformt. Wenn das Spanleitelement rippenartig ausgeformt ist, hat es einen Rippengrat, der üblicherweise quer zur Stirnschneidkante erstreckend ist. Wenn das Spanleitelement kuppelartig ausgebildet ist, ist das Spanleitelement als allseits gewölbte Erhebung ausgebildet, ohne eine bestimmte Haupterstreckungsrichtung aufzuweisen. Üblicherweise ist das Spanleitelement in einer Schnittfläche parallel zur Stirnschneidkante stumpfer konvex verrundet als das Spanleitelement in einer Schnittfläche parallel zur Stirnschneidkante.

Gemäß einer Weiterbildung sind das Spanformelement und das Spanleitelement zueinander in Richtung quer zur Stirnschneidkante fluchtend ausgerichtet, so dass das Spanleitelement in eine durch das Spanleitelement erzeugte Spanrille eingreifbar ausgerichtet ist. Dadurch wird eine optimale Führung des durch das Spanformelement verformten Spans bereitgestellt, indem das Spanleitelement in die erzeugte Rille eingreifen kann, was ein helixartiges Aufrollen des Spans noch mehr behindert.

Gemäß einer Weiterbildung weisen der Stirnrandbereich und der Innenbereich zusammen eine Spanformmulde zur Spanformung eines mittig über die Stirnschneidkante ablaufenden Spans auf, wobei die Spanformmulde auf einen Tiefpunkt unterhalb des Tiefpunkts vertieft ist, auf den die Spanfläche beidseits des Spanformelements vertieft ist. Die Spanformmulde ist also mittig bezüglich der Stirnschneidkante angeordnet, so dass der mittig erzeugte Span, als der Span, der beim Einstechen mit der gesamten Breite der Stirnschneidkante erzeugt wird, umgeformt wird, um den Spanbruch zu erleichtern. Die Spanformmulde ist ein Teil des Stirnrandbereichs und ein Teil des Innenbereichs.

Gemäß einer Weiterbildung ist die Spanformmulde in einer Schnittfläche parallel und in einer Schnittfläche quer zur Stirnschneidkante konkav verrundet. Durch die quer zur Stirnschneidkante gebildete konkave Verrundung erfährt der mittig über die Stirnschneidkante ablaufende Span eine plastische Querstauchung.

Gemäß einer Weiterbildung ist der Innenbereich satteldachförmig mit einer Firststruktur und beidseits dieser abfallenden seitlichen Dachflächen und einer giebelartigen stirnseitigen Dachfläche ausgebildet, wobei die giebelartige stirnseitige Dachfläche das Spanleitelement in Form einer lokalen Erhebung aufweist. Damit ist zumindest eine der seitlichen Dachflächen zur Spanformung eines über eine der Seitenschneidkanten ablaufenden Spans angeordnet. Die giebelartige stirnseitige Dachfläche ist üblicherweise bezüglich der Stirnschneidkante von dieser weg in Richtung des Schafts geneigt, in Aufsicht auf die Spanfläche also flächenmäßig ersichtlich, was bei einer umgekehrten Neigung nicht der Fall wäre.

Gemäß einer Weiterbildung weist die Firststruktur einen stirnseitigen Hochpunkt und einen schaftseitigen Hochpunkt auf, der gegenüber dem stirnseitigen Hochpunkt tiefer gelegen ist. Die Firststruktur fällt also von dem stirnseitigen Hochpunkt auf den schaftseitigen Hochpunkt ab. In seitlicher Blickrichtung auf eine der Seitenschneidkanten bildet diese dann mit der Firststruktur zumindest abschnittsweise eine V-Form mit einem Scheitelpunkt dort, wo sich die beiden Flanken des Vs aufseiten des Schafts treffen würden. Es hat sich gezeigt, dass diese so geformte Firststruktur für eine zusätzliche Spanformung bezüglich der durch die Seitenschneidkante erzeugten Späne sorgt und damit den Einsatzbereichs der Stechplatte bezüglich eines Längsdrehens verbessert; beim Längsdrehen verbleibt die Stechplatte in der zu verbreiternden Nut und wird quer zur Nut mit der Seitenschneidkante voran in das Werkstück unter einer relativen Drehung bezüglich des Werkstücks bewegt.

Gemäß einer Weiterbildung weist die Firststruktur in einer Schnittfläche quer zur Stirnschneidkante zumindest einen konkav verrundeten Bereich zur Spanformung eines durch eine der Seitenschneidkanten erzeugten Spans auf. Dies sorgt für eine Querstauchung der über die Seitenschneidkante ablaufenden und entlang der seitlichen Dachfläche aufsteigender Späne.

Gemäß einer Weiterbildung ist der Stirnrandbereich zumindest außermittig bezüglich der Stirnschneidkante in den Innenbereich unter Bildung einer stirnseitigen Übergangskante übergehend ausgebildet. Der Innenbereich ist damit von dem Stirnrandbereich zumindest aufseiten der Stirnschneidkante außermittig strukturell abgesetzt. Die Übergangskante sorgt für eine Spanstauchung des jenseits der Stirnschneidkante außermittig aufsteigenden Spans.

Gemäß einer Weiterbildung weist das Spanformelement einen unterhalb der Übergangskante gelegenen Hochpunkt auf. Es hat sich gezeigt, dass die Übergangskante und das Spanformelement bei einer solchen Anordnung des Hochpunkts eine besonders starke plastische Verformung des Spans erzeugen.

Gemäß einer Weiterbildung ist das Spanformelement in einem parallel zur Stirnschneidkante bemessenen Abstand zu einem nächstgelegenen Übergangspunkt angeordnet, wobei der Übergangspunkt durch einen Übergang von einer der Seitenschneidkanten in eine der Schneidecken gebildet ist, wobei der Abstand maximal 30 %, vorzugsweise maximal 25 %, von einer durch den Schneidkantenabschnitt stirnseitig definierten maximalen Einstechbreite beträgt. Das Spanformelement ist damit im für das Versatzstechen, wie sich gezeigt hat, bevorzugten äußeren Bereich der Stirnschneidkante angeordnet.

Gemäß einer Weiterbildung weist die Spanfläche einen mit dem Innenbereich und einem der beiden Schneidecken verbundenen Eckenrandbereich auf, wobei der Eckenrandbereich mindestens ein Spanformelement in dem Eckenrandbereich zur rillenartigen Spanformung eines über die Schneidecke ablaufenden Spans aufweist und beidseits dieses Spanformelements auf einen Tiefpunkt unterhalb von der Schneidecke vertieft ist, wobei dieses Spanformelement in Form einer lokalen Spanflächenerhebung ausgebildet ist. Beim Versatzstechen sticht der Schneidkantenbereich auch mit einer der beiden Schneidecken in des Werkstück ein, also nur mit der Stirnschneidkante. Indem der Eckenrandbereich das mindestens eine Spanformelement in dem Eckenrandbereich zur rillenartigen Spanformung des über die Schneidecke, also ihrer Schneidkante, ablaufenden Spans aufweist und beidseits dieses Spanformelements auf den Tiefpunkt unterhalb von der Schneidecke, also ihrer Schneidkante, vertieft ist, wobei dieses Spanformelement in Form der lokalen Spanflächenerhebung ausgebildet ist, wird in vorteilhafterweise auch der über diese Schneidecke ablaufende Span mit zumindest einer Rille plastisch versehen und so zum leichteren Spanbruch verformt. Das Spanformelement des Eckenrandbereichs kann dem Spanformelement des Stirnrandbereichs analog ausgebildet sein, zum Beispiel rippenartig oder kuppelartig.

Gemäß einer Weiterbildung weist die Spanfläche einen mit dem Innenbereich und einem der beiden Seitenschneidkanten verbundenen Seitenrandbereich auf, wobei der Seitenrandbereich mindestens ein seitliches Spanformelement zur rillenartigen Spanformung eines über die Seitenschneidkante ablaufenden Spans aufweist und beidseits des seitlichen Spanformelements auf einen Tiefpunkt unterhalb von der Seitenschneidkante vertieft ist, wobei das seitliche Spanformelement in Form einer lokalen Spanflächenerhebung ausgebildet ist. Beim bereits beschriebenen Längsdrehen, welches in Kombination mit dem Versatzstechen verwendet werden kann, hat sich der Seitenrandbereich mit dem seitlichen Spanformelement als vorteilhaft erwiesen, um die so seitlich erzeugten Späne leichter zu brechen. Das seitliche Spanformelement kann dem Spanformelement des Stirnrandbereichs analog ausgebildet sein, zum Beispiel rippenartig oder kuppelartig.

Vorzugsweise sind der Stirnrandbereich, der Eckenrandbereich und der Seitenrandbereich miteinander verbunden.

Gemäß einer Weiterbildung erstrecken sich die Stirnschneidkante und zumindest eine der beiden Seitenschneidkanten zumindest abschnittsweise in einer Schneidkantenebene, wobei der Innenbereich oberhalb der Stirnschneidkante gelegen, der Tiefpunkt, auf den der Stirnrandbereich beidseits des Spanformelements abfällt, unterhalb der Schneidkantenebene gelegen, das Spanformelement oberhalb und unterhalb der Schneidkantenebene sowie quer zur Stirnschneidkante erstreckend ist, wobei das Spanformelement rippenartig ausgebildet ist, wobei das Spanleitelement rippenartig oder kuppelartig ausgebildet ist und in Richtung quer zur Stirnschneidkante mit dem Spanformelement fluchtend angeordnet ist, wobei der Stirnrandbereich entlang der Stirnschneidkante dort aufhört, wo die Schneidecken mit der Stirnschneidkante verbunden sind. Die Schneidkantenebene ist die üblicherweise vorhandene Schneidkantenebene.

Vorzugsweise ist die Spanfläche in Aufsicht bezüglich einer die Stirnschneidkante mittig durchstoßenden Längsachse zumindest im Bereich des Stirnrandbereichs symmetrisch ausgebildet ist.

Weitere Vorteile und Zweckmäßigkeiten der Erfindung ergeben sich anhand der nachfolgenden Beschreibung von einem Ausführungsbeispiel unter Bezugnahme auf die beigefügten Figuren.

Von den Figuren zeigen
- Fig. 1a:: eine Darstellung eines vorderen Abschnitts einer Stechplatte in Aufsicht mit Blickrichtung auf eine Spanfläche;
- Fig. 1b:: ein vergrößertes Detail von Fig. 1a;
- Fig. 2a:: eine Stirnseitendarstellung der Stechplatte gemäß Fig. 1a;
- Fig. 2b:: ein vergrößertes Detail von Fig. 2a;
- Fig. 3a:: eine Seitendarstellung der Stechplatte gemäß Fig. 1a;
- Fig. 3b:: ein vergrößertes Detail von Fig. 3a;
- Fig. 4a:: eine Darstellung eines Schnitts durch die Stechplatte gemäß Fig. 1a gemäß den Schnittlinien A-A;
- Fig. 4b:: ein vergrößertes Detail von Fig. 4a;
- Fig. 5a:: eine Darstellung eines Schnitts durch die Stechplatte gemäß Fig. 1a gemäß den Schnittlinien B-B;
- Fig. 5b:: ein vergrößertes Detail von Fig. 5a;
- Fig. 5c:: ein weiteres vergrößertes Detail von Fig. 5a;
- Fig. 6a:: eine Darstellung eines Schnitts durch die Stechplatte gemäß Fig. 1a gemäß den Schnittlinien C-C;
- Fig. 6b:: ein vergrößertes Detail von Fig. 6a;
- Fig. 7a:: eine Darstellung eines Schnitts durch die Stechplatte gemäß Fig. 1a gemäß den Schnittlinien D-D;
- Fig. 7b:: ein vergrößertes Detail von Fig. 7a;
- Fig. 8:: eine perspektivische Darstellung der Stechplatte gemäß Fig. 1a.

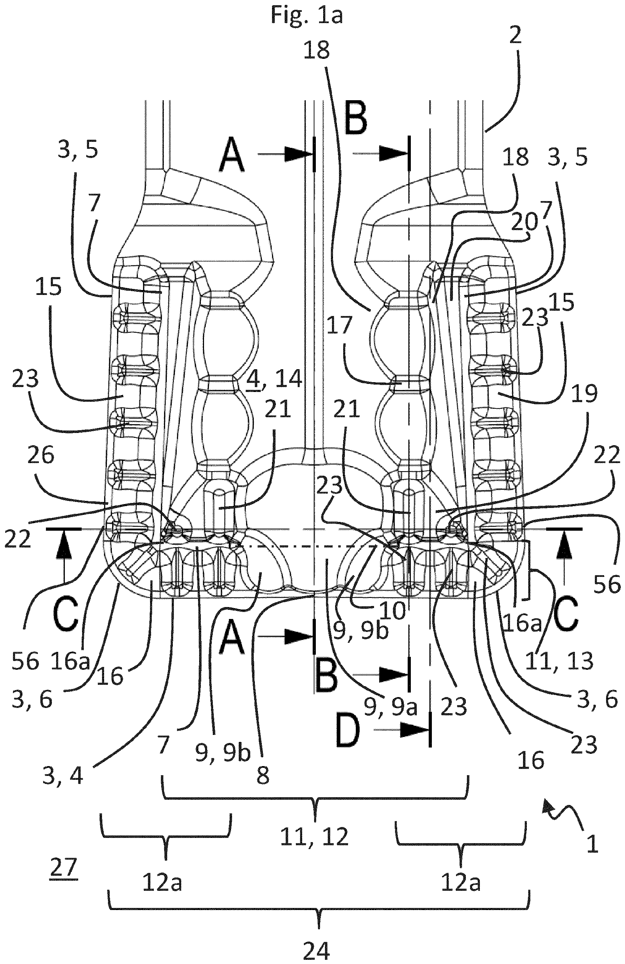

Fig. 1a zeigt eine Darstellung eines vorderen Abschnitt seiner Stechplatte 1 in Aufsicht. Die Stechplatte 1 ist zum Versatzstechen ausgebildet.

Die Stechplatte 1 weist einen Schaft 2 und einen von dem Schaft 2 längs und quer zu diesem abstehenden Schneidkantenabschnitt 3 auf. Durch den Schneidkantenabschnitt 3 wird eine Spanfläche 4 berandet. Der Schneidkantenabschnitt 3, welcher in Aufsicht gemäß Fig. 1a betrachtet wird, weist eine gerade Stirnschneidkante 4, zwei seitliche Seitenschneidkanten 5 und zwei Schneidecken 6 auf, die durch die Stirnschneidkante 4 miteinander verbunden sind.

Die Stirnschneidkante 4 und die beiden Seitenschneidkanten 5 erstrecken sich in einer gemeinsamen Schneidkantenebene 27, auf welche in Fig. 1a senkrecht geblickt wird.

Die Spanfläche 4 weist eine Übergangskante 7 auf, die sich entlang der beiden Seitenschneidkanten 5 und abschnittsweise entlang der Stirnschneidkante 4 erstreckt, sodass die Übergangskante 7 beidseits eines Mittelpunkts 8 von der Stirnschneidkante 4 unterbrochen ist, und zwar durch eine sich beidseits des Mittelpunkts 8 in Aufsicht erstreckende Spanformmulde 9 von und in der Spanfläche 4.

Zwischen der Übergangskante 7 und ihrer hypothetischen linearen Verlängerung 10, durch welche die Übergangskante 7 in Aufsicht aufseiten der Stirnschneidkante 4 nicht mehr unterbrochen, sondern auch im Bereich der Spanmulde 9 durchgehend wäre, weist die Spanfläche 4 einen Stirnrandbereich 11 mit einer Erstreckung 12 entlang der Stirnschneidkante 4 und einer Erstreckung 13 quer zur Stirnschneidkante 4 auf, also über die gesamte Breite der Stirnschneidkante 4 und die gesamte Erstreckung der Schneidecken 6, wo diese jeweils in Aufsicht verrundet sind. Der Stirnrandbereich 11 wird durch die Stirnschneidkante 4 und die Übergangskante 7 und ihre linearen Verlängerung 10 berandet, durch letztere nur hypothetisch.

Die Spanfläche 4 weist innerhalb der Übergangskante 7 und ihrer linearen Verlängerung 10 einen Innenbereich 14 auf, der dementsprechend mit dem Stirnrandbereich 11 verbunden ist, sodass der Stirnrandbereich 11 zwischen der Stirnschneidkante 4 und dem Innenbereich 14 angeordnet ist.

Zwischen der Übergangskante 7 und der jeweils ihr nächstliegenden Seitenschneidkante 5 weist die Spanfläche 4 jeweils einen Seitenrandbereich 15 auf, der folglich von der Übergangskante 7 und jeweils einer der beiden Seitenschneidkanten 15 berandet und mit dem Innenbereich 14 verbunden ist.

Die Spanfläche 4 weist bezüglich jeder der Schneidecken 6 einen Eckenrandbereich 16 auf, der jeweils mit dem Stirnrandbereich 11 und einem der Seitenrandbereiche 15 und damit jeweils mit einer durch die Übergangskante 7 gebildeten Übergangsecke 16a verbunden ist.

Der Innenbereich 14 ist beidseits des Mittelpunkts 8 jeweils aufseiten einer der Seitenschneidkanten 5 satteldachförmig ausgebildet, und zwar mit einer sich quer zur Stirnschneidkante 4 jeweils erstreckenden Firststruktur 17 und von dieser jeweils seitlich abfallenden seitlichen Dachflächen 18 und aufseiten der Stirnschneidkante 14 einer giebelartigen Dachfläche 19; aus Gründen der Übersichtlichkeit wurde der Innenbereich 14 bezüglich seiner satteldachförmigen Ausbildung nur auf der in Fig. 1a rechten Seite mit den Bezugszeichen 17, 18 und 19 versehen.

Aufseiten der Seitenschneidkanten 5 weist der Innenbereich 14 jeweils zwischen der seitlichen Dachfläche 18 und der Übergangskante 7 ein durch diese berandetes flaches Plateau 20 auf; aus Gründen der Übersichtlichkeit ist das Plateau 20 nur auf der rechten Seite in Fig. 1a mit dem Bezugszeichen 20 versehen. Das Plateau 20 ist dreieckförmig und verengt sich jeweils in Richtung auf die Stirnschneidkante 4.

Die giebelartigen Dachflächen 19 sind in Richtung auf den Schaft 2 weg von der Stirnschneidkante 4 geneigt, so dass sie dementsprechend flächenmäßig in der Aufsicht gemäß Fig. 1a ersichtlich sind. Die giebelartigen Dachflächen 19 weisen aufseiten der Spanformmulde 9, welche in eine mittige Hauptmulde 9a und beidseits der Mittelpunkts 8 jeweils in eine gegenüber der Hauptmulde 9a flachere, nierenförmige Nebenmulde 9b unterteilt ist, jeweils ein rippenartiges Spanleitelement 21 in Form einer lokalen Spanflächenerhebung und aufseiten der bezüglich der giebelartigen Dachfläche 19 nächstliegenden Schneidecke 6 ein kuppelartiges Spanleitelement 22 in Form einer lokalen Spanflächenerhebung auf; denkbar und auch möglich ist es aber auch, das kuppelartige Spanleitelement 22, trotz seiner bezüglich der Spanleitung zusätzlich unterstützenden Wirkung, wegzulassen.

Der Stirnrandbereich 11 weist jeweils ein mit dem Spanleitelement 21 in Richtung quer zur Stirnschneidkante 4 fluchtendes, rippenartiges Spanformelement 23 in Form einer lokalen Spanflächenerhebung und ein mit dem Spanleitelement 22 in Richtung quer zur Stirnschneidkante fluchtendes, weiteres rippenartiges Spanformelement 23 in Form einer lokalen Spanflächenerhebung auf; aus Gründen der Übersichtlichkeit sind nur die in Figur 1a rechten Spanformelemente 23 des Stirnrandbereichs 11 mit ihren Bezugszeichen versehen.

Die Spanformelemente 23, die sich jeweils quer zur Stirnschneidkante 4 erstrecken, sind beidseits des Mittelpunkts 8 jeweils innerhalb eines parallel zur Stirnschneidkante 4 bemessenen Abstands 12a von einem nächstgelegenen Übergangspunkt 56 angeordnet, wobei der Übergangspunkt 56 durch einen Übergang von einer der Seitenschneidkanten 5 in die Schneidecke 6 gebildet ist, wobei der Abstand 12a maximal 30 % von einer durch den Schneidkantenabschnitt 3 stirnseitig definierten maximalen Einstechbreite 24 beträgt. Die Abstände 12a können unabhängig voneinander gewählt werden, also bezüglich Fig. 1a und des Mittelpunkts 8 rechts und links zueinander verschieden gewählt werden. Die Spanformmulde 9 befindet sich außerhalb der Abstände 12a. Die Einstechbreite 24 wird zwischen den Übergangspunkten 56 parallel zur Stirnschneidkante bemessen.

Der Eckenbereich 16 weist jeweils ein sich bezüglich seiner kreisförmigen Krümmung radial nach innen erstreckendes weiteres rippenförmiges Spanformelement 23 und die Seitenrandbereiche 15 jeweils exemplarisch fünf weitere rippenförmige Spanformelemente 23 auf, die sich jeweils quer zur jeweiligen Seitenschneidkante 5 erstrecken.

Die Seitenschneidkanten 5, die Schneidecken 6 und die Stirnschneidkante 4 weisen jeweils eine Fase 26 auf, in deren Bereich sich die Spanformelement 23 hineinerstrecken.

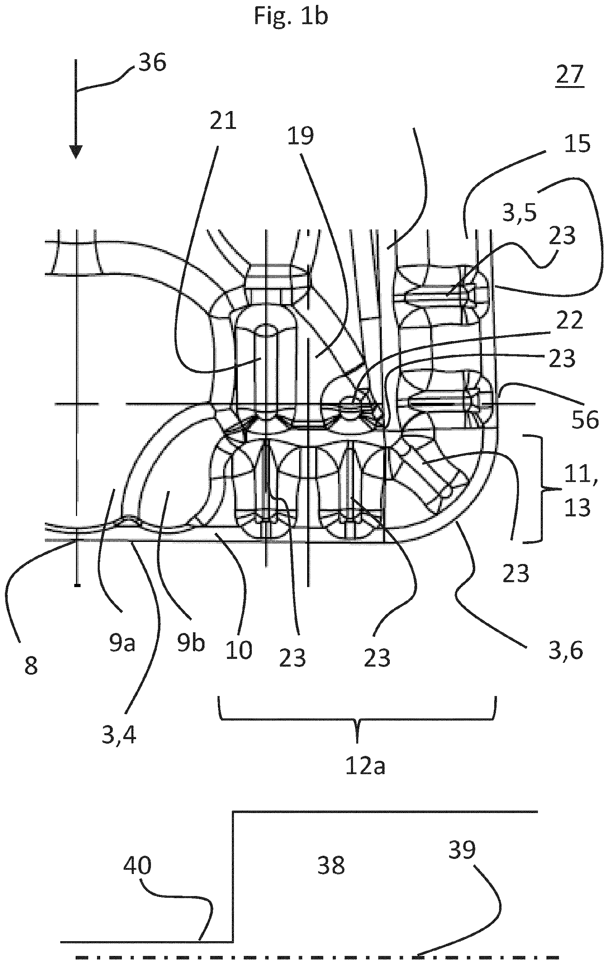

Fig. 1b zeigt ein vergrößertes Detail des Schneidkantenbereichs 6 im Bereich eines der Abstände 12a, also des Bereichs, der beim Versatzstechen in ein Werkstück 38 unter der Einstechrichtung 36 radial zu einer Werkstückdrehachse 39 in das Werkstück 38 eingestochen wird, um eine in Fig. 1b nur teilweise dargestellte Nut 40 um den Abstand 12a oder weniger parallel zur Werkstückdrehachse 39 zu verbreitern; die Stechplatte 1 wird also nicht im gesamten Bereich der Stirnschneidkante 4 eingestochen. Die Einstechrichtung 36 ist in der Schneidkantenebene 27 enthalten und senkrecht zur Stirnschneidkante 4 orientiert.

Die Spanformelemente 23 des Stirnrandbereichs 11 erstrecken sich oberhalb und unterhalb der Schneidkantenebene 27 und damit der Stirnschneidkante 4, so dass ein innerhalb des durch den Abstand 12a definierten Bereichs ablaufender Span im so außermittigen Bereich der Stirnschneidkante 4 rillenförmig durch die Spanformelemente 23 verformt wird; die Rillen verlaufen in ihrer Projektion in die Zeichnungsebene der Fig. 1b parallel zur Einstechrichtung 36 und rollen sich dabei spiralförmig auf, unterstützt durch die Spanleitelemente 21 und 22, welche den Span leiten und in die Rillen eingreifen.

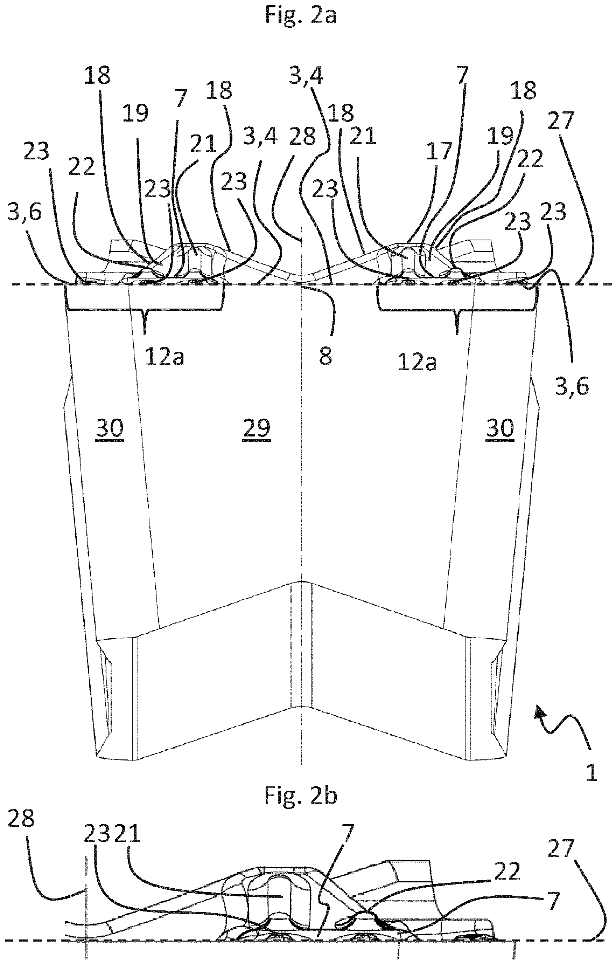

In Fig. 2a zeigt eine Stirnseitendarstellung der Stechplatte 1. In Fig. 2a ist besonders gut zu erkennen, dass die Spanformelemente 23 im Stirnrandbereich 11 und im Eckenrandbereich 16 jeweils auch oberhalb der Schneidkantenebene 27 und damit oberhalb der Stirnschneidkante 4 beziehungsweise der Schneidecken 6 erstreckt sind, und dass die Spanleitelemente 21 und 22, die Übergangskante 7 und damit der Innenbereich 14 vollständig oberhalb der Schneidkantenebene 27 und damit oberhalb der Stirnschneidkante 4 angeordnet sind.

Ein bezüglich des Mittelpunkts 8 der Stirnschneidkante 4 außermittig über die Stirnschneidkante 8 ablaufender Span, also einer, der im durch den Abstand 12a definierten außermittigen Bereich durch die Stirnschneidkante 4 zusammen mit der Schneidecke 6 erzeugt wird, kann so auf jeder Seite des Mittelpunkts 8 durch die Spanformelemente 23 rillenartig plastisch verformt werden. Die Spanformelemente 23 drücken sich zumindest so weit in den außermittig beim Versatzstechen gemäß Fig. 1b erzeugten Span ein, wie sie oberhalb der Schneidkantenebene 27 und der Stirnschneidkante 4 erstreckt sind. Die Spanleitelemente 21 und 22 greifen dann in so erzeugte Rillen des Spans aufgrund ihrer oberhalb der Schneidkantenebene 27 gelegenen Anordnung ein, was ein seitliches helixartiges Aufrollen des Spans verhindert, denn der Span wird durch die Spanleitelemente 21 und 22 schienenartig geführt und kann sich so spiralförmig besser aufrollen und so auch leichter brechen; eine Aufrollachse beim spiralförmigen Aufrollen des Spans ist parallel zur Stirnschneidkante 4 orientiert.

In Fig. 2a ist außerdem die satteldachförmige Form des Innenbereichs 14 beidseits des Mittelpunkts 8 besonders gut zu erkennen, man beachte dabei die jeweils von der Firststruktur 17 seitlich abfallenden Dachflächen 18. Die giebelartigen Dachflächen 19 sind oberhalb der Schneidkantenebene 27 und der Stirnschneidkante 4 angeordnet und dienen als Träger der Spanleitelemente 21 und 22 und sind als stirnseitige Flanken ausgebildet; die Spanleitelemente 21 und 22 sind dabei als Erhebungen bezüglich der giebelartigen Dachflächen 19 ausgebildet.

In Fig. 2a ist außerdem zu erkennen, dass eine Mittelachse 28 senkrecht zur Schneidkantenebene 27 orientiert ist und den Mittelpunkt 8 virtuell durchstößt. Bezüglich und parallel zur Mittelachse 27 lässt sich bemessen, um wieviel sich die Spanformelemente 23 auch oberhalb der Schneidkantenebene 27 erstrecken und um wieviel die Übergangskante 7 und damit der Innenbereich 14 oberhalb der Schneidkantenebene 27 angeordnet sind. So zeigt Fig. 2a, dass die Übergangskante 7 oberhalb der Stirnschneidkante 4 und damit der Schneidkantenebene 27 angeordnet ist, so dass der Span gegen die Übergangskante 7 stößt, also dadurch in eine Richtung verformt ist, die sein spiralförmiges Aufrollen unterstützt, wobei eine Außenseite des spiralförmig aufgerollten Spans die durch die Spanformelemente 23 stirnseitig gebildeten Rillen aufweist, in welche die Spanleitelement 21 und 22 aufgrund ihrer jeweils quer zur Stirnschneidkante fluchtenden Anordnung mit jeweils einem der Spanformelemente 23 im Bereich des Stirnrandbereichs 11 formschlussartig eingreifen.

Fig. 2a zeigt ferner, dass die Stechplatte 1 aufseiten der Stirnschneidkante 4 eine stirnseitige Freifläche 29 und jeweils aufseiten der Schneidecken 6 eine Eckenfreifläche 30 aufweist.

Fig. 2b zeigt ein vergrößertes Detail der Fig. 2a. Fig. 2b zeigt besonders deutlich, dass die Übergangskante 7 und die Spanleitelement 21 und 22 oberhalb der Schneidkantenebene 27 und damit oberhalb der Stirnschneidkante 4 angeordnet sind.

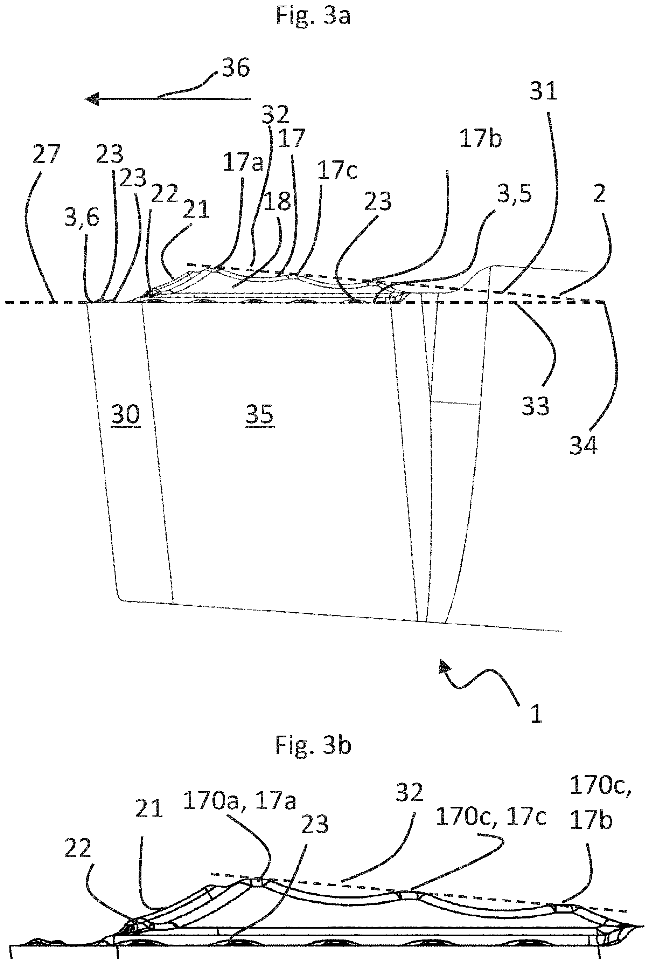

Fig. 3a zeigt eine Seitenansichtsdarstellung der Stechplatte 1 in Blickrichtung parallel zur Schneidkantenebene 27 und parallel zur Stirnschneidkante 4. In Fig. 3a ist besonders gut zu erkennen, dass sich auch die Spanformelemente 24 des Seitenrandbereichs 15 oberhalb der Schneidkantenebene 27 und damit auch oberhalb der Seitenschneidkante 5 erstrecken; die Stechplatte 1 sieht aufseiten deren anderen Seitenschneidkante 5 analog aus.

In Fig. 3a ist außerdem besonders gut zu erkennen, dass die Firststruktur 17 einen stirnseitigen Hochpunkt 17a, also einen im Bereich der Firststruktur 17 zur Stirnschneidkante 4 nächstgelegenen Hochpunkt oberhalb der Schneidkantenebene 27, und einen schaftseitigen Hochpunkt 17b, also einen im Bereich der Firststruktur 17 zum Schaft 2 nächstgelegenen Hochpunkt oberhalb der Schneidkantenebene 27, aufweist. Der Hochpunkt 17a sorgt für den flankenartigen Anstieg der giebelartigen Dachfläche 19. Der Hochpunkt 17b ist gegenüber dem Hochpunkt 17a tiefer gelegen, so dass eine lineare Extrapolation 31 einer linearen Interpolation 32 bezüglich der Hochpunkte 17a und 17b mit einer linearen Extrapolation 33 der Seitenschneidkante 5 eine V-Form bildend ist, deren Scheitelpunkt 34 aufseiten des Schafts 2 liegt. Die so ausgeformte Firststruktur 17 sorgt für eine starke Spanumformung eines über die Seitenschneidkante 5 ablaufenden Spans, der durch die Spanformelement 23 des Seitenrandbereichs 3 analog zum Stirnrandbereich 11 rillenartig verformt wird, also dadurch versteift wird, um beim spiralförmigen Aufrollen leichter zu brechen. Dies ist für einen Einsatz der Stechplatte 1 beim Längsdrehen vorteilhaft, weil dann eine der beiden Seitenschneidkanten 5 das Werkstück hauptsächlich schneidet, um zum Beispiel eine durch ein Versatzstechen der Nut mit der Schneidplatte 1 verbreiterte Nut alternativ weiter zu verbreitern.

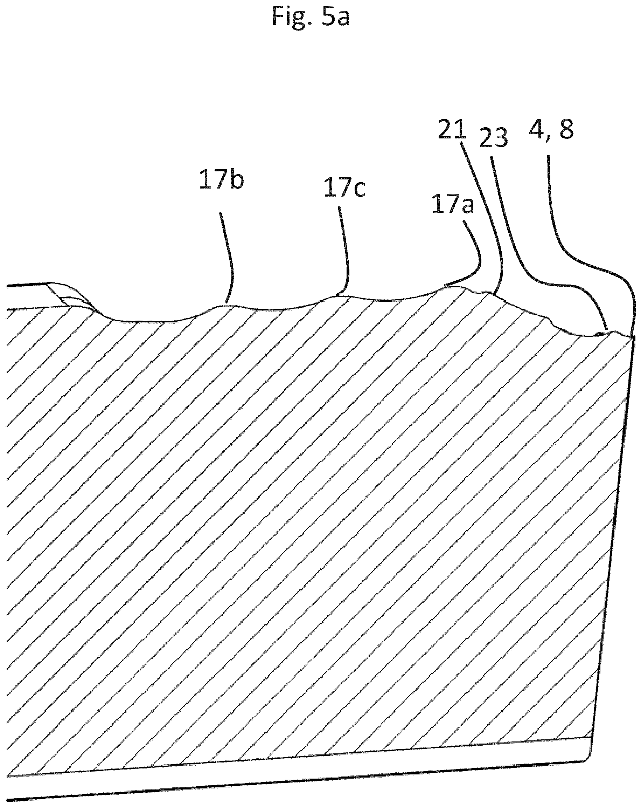

Zwischen den Hochpunkten 17a und 17b weist die Firststruktur einen mittleren Hochpunkt 17c auf, der unterhalb des Hochpunkts 17a und oberhalb der Hochpunkts 17b gelegen ist; die exakte Position der Hochpunkte 17a, 17b und 17c zeigt die in Fig. 5a dargestellte Schnittfläche, welche senkrecht zur Stirnschneidkante 4 und in dieser senkrechten Orientierung mittig bezüglich eines der Spanleitelemente 21 orientiert ist. Zwischen den Hochpunkten 17a und 17c sowie zwischen den Hochpunkten 17c und 17b ist die Firststruktur 17 in der Seitenansicht gemäß Fig. 3a jeweils konkav verrundet, wodurch der über die Seitenschneidkante 5 ablaufende Span quergestaucht wird, was den Spanbruch zusätzlich erleichtert.

Die Hochpunkte 17a, 17b und 17c sind, wie Fig .3a zeigt, als die jeweiligen Mittelpunkte von plateauartigen Abplattungen 170a, 170b und 170c von der Firststruktur 17 definiert.

Fig. 3a zeigt ferner, dass der Seitenschneidkante 5 eine seitliche Freifläche 35 zugeordnet ist; der bezüglich Fig. 3a anderen Seitenschneidkante 5 ist eine analoge seitliche Freifläche 35 zugeordnet.

Fig. 3b zeigt ein vergrößertes Detail aus der Fig. 3a im Bereich der Spanformelemente 23 des Seitenrandbereichs 15, um zu verdeutlichen, dass diese Spanformelemente 23 sich auch oberhalb der Schneidkantenebene 27 und damit oberhalb der Seitenschneidkante 5 erstrecken.

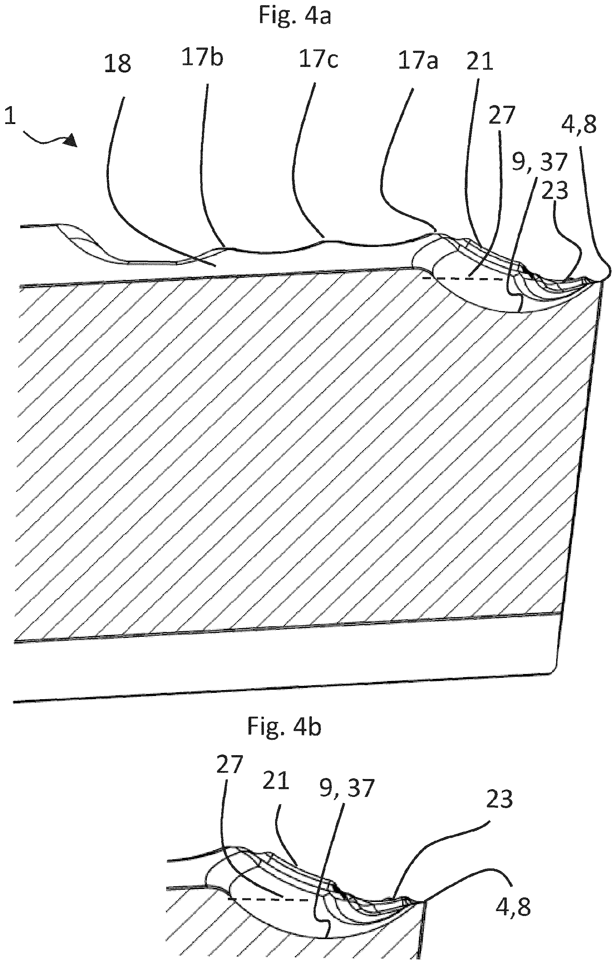

Fig. 4a zeigt eine Darstellung einer Schnittfläche gemäß den Schnittlinien A-A in Fig. 1a, also senkrecht zur Stirnschneidkante 4 und durch den Mittelpunkt 8. Fig. 4a verdeutlicht, dass die Spanformmulde 9 von der Stirnschneidkante 4 auf einen Tiefpunkt 37 unterhalb der in Fig. 4a abschnittsweise gezeigten Schneidkantenebene 27 abfallend ausgebildet ist und senkrecht zur Stirnschneidkante 4 konkav verrundet ist, um so ein spiralförmiges Aufrollen eines über die Stirnschneidkante 4 mittig ablaufenden Spans zu unterstützen.

Fig. 4b zeigt eine vergrößerte Darstellung von der Schnittfläche gemäß Fig. 4a im Bereich des Tiefpunkts 37.

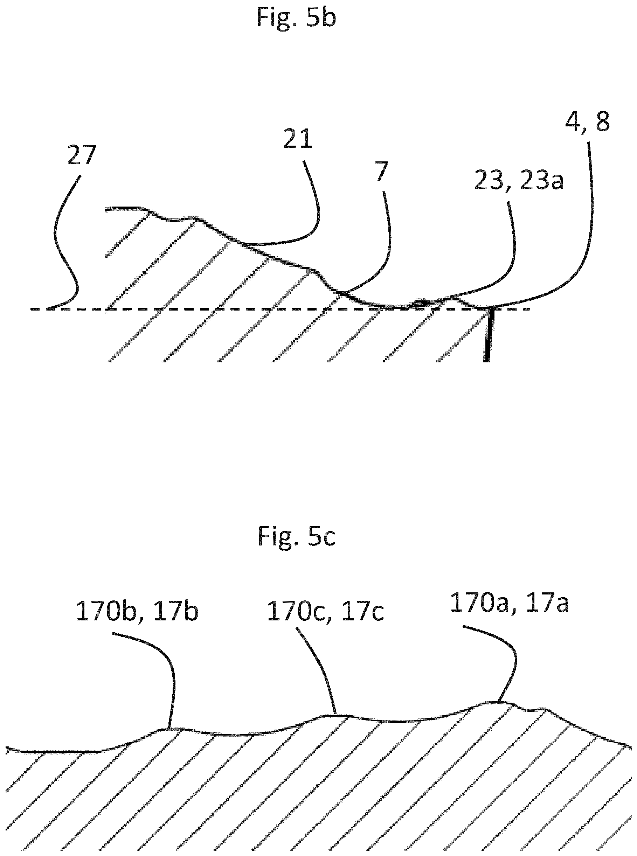

Fig. 5a zeigt eine Darstellung einer Schnittfläche gemäß den Schnittlinien B-B in Fig. 1a, also senkrecht zur Stirnschneidkante 4 und dabei jeweils mittig durch das Spanformelement 23 und das Spanleitelement 22. Fig. 5b zeigt eine vergrößerte Darstellung von der Schnittfläche gemäß Fig. 5b im Bereich des Spanformelements 23 und des damit senkrecht zur Stirnschneidkante 4 fluchtenden Spanleitelements 21.

In Fig. 5b ist besonders gut zu erkennen, dass das Spanformelement 23 exemplarisch für die übrigen Spanformelement 23 des Stirnrandbereichs 11, der Eckenrandbereiche 16 und der Seitenrandbereiche 15 jeweils einen Hochpunkt 23a oberhalb der Schneidkantenebene 27 aufweist und zwischen der Übergangskante 7 und dem Hochpunkt 23a konkav verrundet ist.

Fig. 5b zeigt, dass der Hochpunkt 23a unterhalb der Übergangskante 7 liegt, dies exemplarisch zumindest für die Spanformelemente 23 des Stirnrandbereichs 11.

Fig. 5c zeigt eine vergrößerte Darstellung von der Schnittfläche gemäß Fig. 5a im Bereich der Hochpunkte 17a, 17b und 17c, welche als die jeweiligen Mittelpunkte plateauartiger Abplattungen 170a, 170b und 170c von der Firststruktur 17 definiert sind. Die plateauartigen Abplattungen 170a, 170b und 170c sind jeweils parallel zur Schneidkantenebene 27 erstreckend ausgebildet.

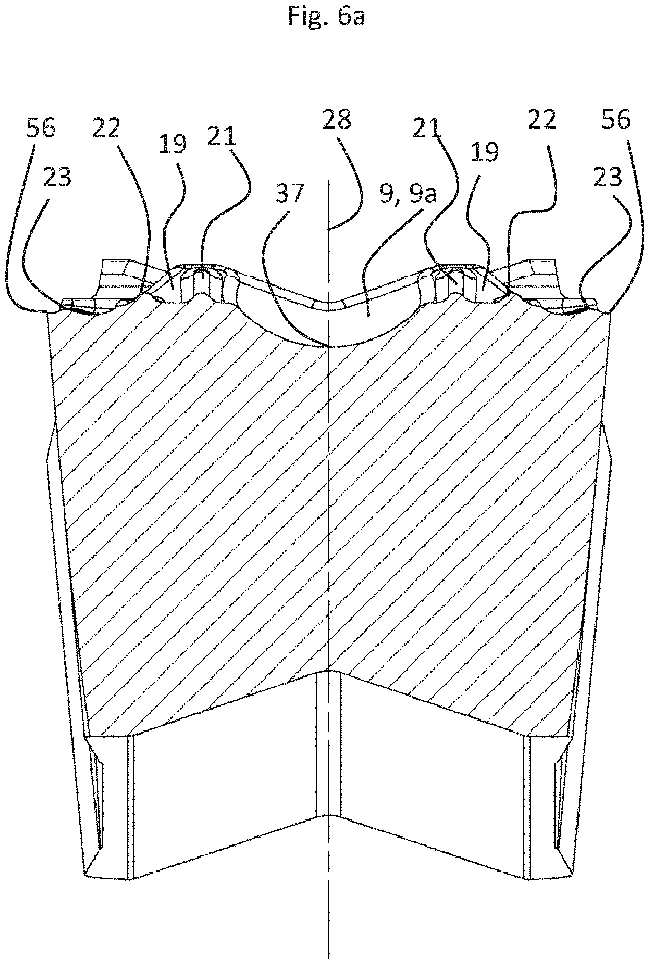

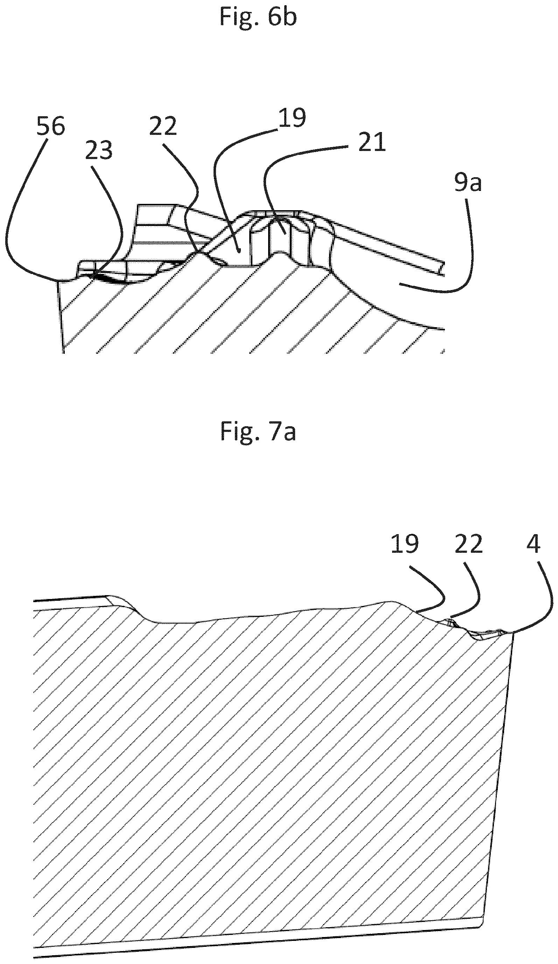

Fig. 6a zeigt eine Darstellung einer Schnittfläche gemäß den Schnittlinien C-C in Fig. 1a, also parallel zur Stirnschneidkante 4 und durch die Übergangspunkte 56. In Fig. 6a zeigt besonders gut, dass die Spanformmulde 9 auch quer zur Stirnschneidkante 4 im Bereich des Tiefpunkts 37 konkav verrundet ist, wodurch der Span eine Querstauchung erfahren kann. Fig. 6b zeigt eine vergrößerte Darstellung von der Schnittfläche gemäß Fig. 6a im Bereich eines der Spanleitelemente 21 und 22.

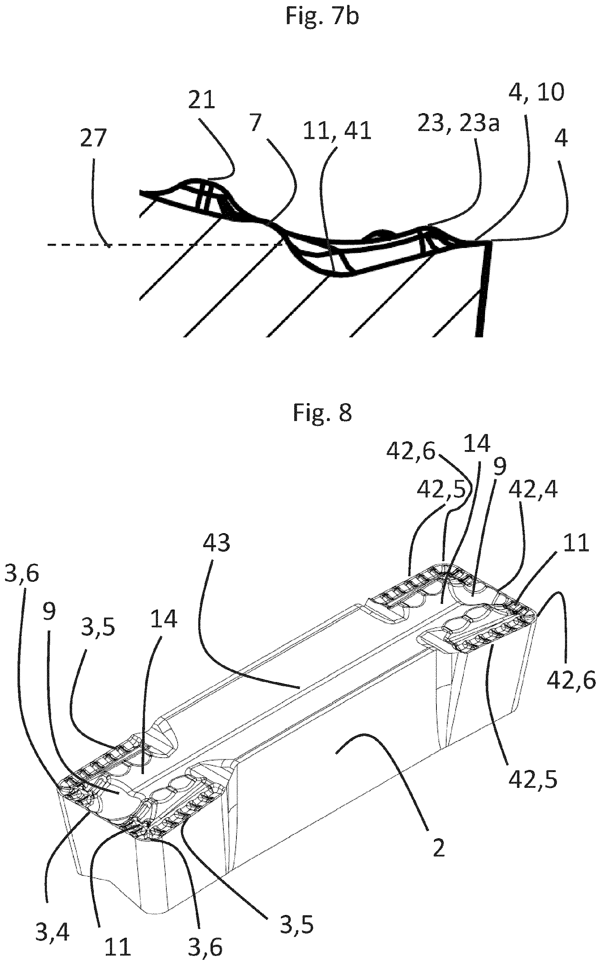

Fig. 7a zeigt eine Darstellung einer Schnittfläche gemäß den Schnittlinien D-D in Fig. 1a, also senkrecht zur Stirnschneidkante 4 und mittig zwischen den Spanformelementen 23 des Stirnrandbereichs 11 auf derselben Seite bezüglich des Mittelpunkts 8. Fig.7b zeigt eine vergrößerte Darstellung von der Schnittfläche gemäß Fig. 7a im Bereich der Stirnschneidkante 4. Fig. 7b zeigt besonders deutlich und für die übrigen Spanformelemente 23 exemplarisch, dass der Stirnrandbereich 11 beziehungsweise die Seitenrandbereiche 15 und die Eckenrandbereiche 16 jeweils auf einen Tiefpunkt 41 unterhalb der Schneidkantenebene 27 und damit der Stirnschneidkante 4 beziehungsweise der Seitenschneidkante 5 und der Schneidecken 6 abfallen. Die Tiefpunkte 41 können in Richtung senkrecht zur Schneidkantenebene 27 zu dieser unterschiedliche Abstände aufweisen, so also beidseits eines Spanformelements unterschiedlich weit von der Schneidkantenebene 27 bestandet sein. Der Stirnrandbereich 11 beziehungsweise die Seitenrandbereiche 15 und die Eckenrandbereiche 16 fallen jeweils in Richtung auf den Tiefpunkt 41 aufseiten der Stirnschneidkante 4 beziehungsweise der Seitenschneidkanten 5 und der Schneidecken 6 flacher ab, also auf der jeweils gegenüberliegenden und an die Übergangskante 7 angeschlossenen Seite. Diese Form unterstützt das spiralförmige Aufrollen der Späne. Im Bereich der Fase 10 ist der Stirnrandbereich 11 in der Schnittfläche gemäß Fig. 7a und 7b gerade erstreckend an diese angeschlossen. Die Fase 10 hat einen positiven Spanwinkel, kann aber auch einen Spanwinkel von 0° aufweisen. Der Tiefpunkt 37 liegt unterhalb der Tiefpunkte 41 des Stirnrandbereichs 11.

Fig. 8 zeigt eine perspektivische Darstellung der Stechplatte 1. Fig. 8 zeigt, dass die Stechplatte 1 exemplarisch und optional einen weiteren Schneidkantenabschnitt 42 aufweist, der dem Schneidkantenabschnitt 3 analog ausgebildet und bezüglich diesem an einem entgegengesetzten Ende des Schafts 2 von diesem abstehend angeordnet ist. Der Schaft 2 hat eine V-förmige Nut 43, die sich zentral in den Innenbereich 14 jeweils vorsetzt und in der Spanmulde 9 jeweils mündet. Durch die Nut 43 kann Kühlmittel in Richtung der jeweiligen Stirnschneidkante 4 transportiert werden.

Die vorliegende Erfindung ist nicht auf die Stechplatte 1 und die Ausbildung des Schneidkantenabschnitt 3 und der Spanfläche 4 beschränkt.

Für die Verwendung beim Versatzstechen reicht es aus, dass der Stirnbereich 11 zumindest auf einer Seite des Mittelpunkts 8 zumindest eines der Spanformelement 11 im Abstand 12a aufweist und dass der Innenbereich 14 zumindest ein Spanleitelement 21 oder 22 aufweist, um einen durch das Spanformelement 23 rillenartig verformten Span zu leiten, vorzugsweise so, dass das Spanleitelement 21 oder 22 in eine Spanrille eingreift, und so am besten ein spiralförmiges Aufrollen des Spans zu leiten.

Die Spanformmulde 9 ist optional, aber vorteilhaft, denn sie trägt insbesondere dann zur Spanformung bei, wenn der Stechplatte 1 gemäß der maximalen Einstechbreite 24 in das Werkstück 38 unter der Einstechrichtung 36 radial zur Drehachse 39 einsticht; die nierenförmigen Nebenmulden 9b der Spanformmulde 9 bewirken dabei eine rillenartige Verformung des mittig über die Stirnschneidkante 4 ablaufenden Spans, indem der Span zwischen den Nebenmulden 9b bezüglich seiner ursprünglichen Spandicke mehr und im Bereich der Hauptspanmulde 9a weniger plastisch eingedrückt, was zu einem leichteren Spanbruch führt. Denkbar und auch möglich ist es aber auch, die Spanformmulde 9 wegzulassen, zum Beispiel indem der Stirnrandbereich 11, so wie er im Bereich des Abstands 12a ausgebildet, analog auch im Bereich der dann weggelassenen Spanformmulde 9 auszubilden.

Die Nebenschneidkanten 5 sind optional, aber vorteilhaft, denn sie können zum Längsdrehen verwendet werden, also wenn die Nut 40 durch eine Bewegung der Stechplatte 1 parallel zur Drehachse 39 unter einem schneidenden Kontakt mit dem Werkstück 38 bewegt wird. Die Spanformelemente 23 der Seitenrandbereiche 15 bewirken den Spanformelementen 23 des Stirnrandbereichs 11 analog eine rillenartige Verformung des beim Längsdrehen über die jeweils schneidende Nebenschneidkante 5 auflaufenden Spans, so dass der Span dadurch ebenfalls versteift wird, und so leichter bricht. Der satteldachförmige Innenbereich 4 mit seiner Firststruktur 17 und seitlichen Dachflächen 18 sorgt für eine besonders starke Spanumformung des über die jeweils schneidende Nebenschneidkante 5 auflaufenden Spans, was dessen Spanbruch erleichtert.

## Patentansprüche

1. Stechplatte (1) mit einem Schaft (2) und zumindest einem von dem Schaft (2) abstehenden Schneidkantenabschnitt (3), durch den eine Spanfläche (4) berandet ist und der eine Stirnschneidkante (4), zwei seitliche Seitenschneidkanten (5) und zwei Schneidecken (6), die durch die Stirnschneidkante (4) miteinander verbunden sind, aufweist, wobei die Stirnschneidkante (4) und die beiden Seitenschneidkanten (5) jeweils in Aufsicht gerade ausgeformt sind, wobei die Spanfläche (4) einen mit der Stirnschneidkante (4) verbundenen Stirnrandbereich (11) und einen mit dem Stirnrandbereich (11) verbundenen sowie oberhalb der Stirnschneidkante (4) gelegenen Innenbereich (14) aufweist, wobei der Stirnrandbereich (11) mindestens ein Spanformelement (23) zur rillenartigen Spanformung eines über die Stirnschneidkante (4) außermittig ablaufenden Spans aufweist und beidseits des Spanformelements (23) auf einen Tiefpunkt (41) unterhalb von der Stirnschneidkante (4) vertieft ist, wobei der Innenbereich (14) mindestens ein Spanleitelement (21, 22) zur Spanleitung des durch das Spanformelement (23) verformten Spans aufweist.

2. Stechplatte (1) nach Anspruch 1, wobei sich das Spanformelement (23) oberhalb und unterhalb der Stirnschneidkante (4) erstreckt.

3. Stechplatte (1) nach einem der vorhergehenden Ansprüche, wobei das Spanformelement (23) und/oder das Spanleitelement (21, 22) jeweils rippenartig oder kuppelartig ausgeformt ist.

4. Stechplatte (1) nach einem der vorhergehenden Ansprüche, wobei das Spanformelement (23) und das Spanleitelement (21, 22) zueinander in Richtung quer zur Stirnschneidkante (4) fluchtend ausgerichtet sind, so dass das Spanleitelement (21, 22) in eine durch das Spanleitelement (23) erzeugte Spanrille eingreifbar ausgerichtet ist.

5. Stechplatte (1) nach einem der vorhergehenden Ansprüche, wobei der Stirnrandbereich (11) und der Innenbereich (14) zusammen eine Spanformmulde (9) zur Spanformung eines mittig über die Stirnschneidkante (4) ablaufenden Spans aufweisen, wobei die Spanformmulde (9) auf einen Tiefpunkt (37) unterhalb des Tiefpunkts (41) vertieft ist, auf den die Spanfläche (4) beidseits des Spanformelements (23) vertieft ist.

6. Stechplatte (1) nach Anspruch 5, wobei die Spanformmulde (9) in einer Schnittfläche parallel und in einer Schnittfläche quer zur Stirnschneidkante (4) konkav verrundet ist.

7. Stechplatte (1) nach einem der vorhergehenden Ansprüche, wobei der Innenbereich (14) satteldachförmig mit einer Firststruktur (17) und beidseits dieser abfallenden seitlichen Dachflächen (18) und einer giebelartigen stirnseitigen Dachfläche (19) ausgebildet ist, wobei die giebelartige stirnseitige Dachfläche (19) das Spanleitelement (21, 22) in Form einer lokalen Erhebung aufweist.

8. Stechplatte (1) nach Anspruch 7, wobei die Firststruktur (17) einen stirnseitigen Hochpunkt (17a) und einen schaftseitigen Hochpunkt (17b) aufweist, der gegenüber dem stirnseitigen Hochpunkt (17a) tiefer gelegen ist.

9. Stechplatte (1) nach Anspruch 8, wobei die Firststruktur (17) in einer Schnittfläche quer zur Stirnschneidkante (4) zumindest einen konkav verrundeten Bereich zur Spanformung eines durch eine der Seitenschneidkanten (5) erzeugten Spans aufweist.

10. Stechplatte (1) nach einem der vorhergehenden Ansprüche, wobei der Stirnrandbereich (11) zumindest außermittig bezüglich der Stirnschneidkante (4) in den Innenbereich (14) unter Bildung einer Übergangskante (7) übergehend ausgebildet ist.

11. Stechplatte (1) nach Anspruch 9 oder 10, wobei das Spanformelement (23) einen unterhalb der Übergangskante (7) gelegenen Hochpunkt (23) aufweist.

12. Stechplatte (1) nach einem der vorhergehenden Ansprüche, wobei das Spanformelement (23) in einem parallel zur Stirnschneidkante (4) bemessenen Abstand (12a) zu einem nächstgelegenen Übergangspunkt (56) angeordnet ist, wobei der Übergangspunkt (56) durch einen Übergang von einer der Seitenschneidkanten (5) in eine der Schneidecken (6) gebildet ist, wobei der Abstand (12) maximal 30 % von einer durch den Schneidkantenabschnitt (3) stirnseitig definierten maximalen Einstechbreite (24) beträgt.

13. Stechplatte (1) nach einem der vorhergehenden Ansprüche, wobei die Spanfläche (4) einen mit dem Innenbereich (14) und einem der beiden Schneidecken (6) verbundenen Eckenrandbereich (16) aufweist, wobei der Eckenrandbereich (16) mindestens ein Spanformelement (16) in dem Eckenrandbereich (16) zur rillenartigen Spanformung eines über die Schneidecke (6) ablaufenden Spans aufweist und beidseits dieses Spanformelements (23) auf einen Tiefpunkt (41) unterhalb von der Schneidecke (6) vertieft ist, wobei dieses Spanformelement (23) in Form einer lokalen Spanflächenerhebung ausgebildet ist.

14. Stechplatte (1) nach einem der vorhergehenden Ansprüche, wobei die Spanfläche (4) einen mit dem Innenbereich (4) und einem der beiden Seitenschneidkanten (5) verbundenen Seitenrandbereich (15) aufweist, wobei der Seitenrandbereich (15) mindestens ein seitliches Spanformelement (23) zur rillenartigen Spanformung eines über die Seitenschneidkante (5) ablaufenden Spans aufweist und beidseits des seitlichen Spanformelements (23) auf einen Tiefpunkt (41) unterhalb von der Seitenschneidkante (5) vertieft ist, wobei das seitliche Spanformelement (23) in Form einer lokalen Spanflächenerhebung ausgebildet ist.

15. Stechplatte nach einem der vorhergehenden Ansprüche, wobei sich die Stirnschneidkante (4) und zumindest eine der beiden Seitenschneidkanten (5) zumindest abschnittsweise in einer Schneidkantenebene (27) erstrecken, wobei der Innenbereich (14) oberhalb der Stirnschneidkante (4) gelegen, der Tiefpunkt (41), auf den der Stirnrandbereich (11) beidseits des Spanformelements (23) abfällt, unterhalb der Schneidkantenebene (27) gelegen, das Spanformelement (23) oberhalb und unterhalb der Schneidkantenebene (27) sowie quer zur Stirnschneidkante (4) erstreckend ist, wobei das Spanformelement (23) rippenartig ausgebildet ist, wobei das Spanleitelement (21, 22) rippenartig oder kuppelartig ausgebildet ist und in Richtung quer zur Stirnschneidkante (4) mit dem Spanformelement (23) fluchtend angeordnet ist, wobei der Stirnrandbereich (11) entlang der Stirnschneidkante (4) dort aufhört, wo die Schneidecken (6) mit der Stirnschneidkante (4) verbunden sind.
